# EUROPÄISCHE PATENTSCHRIFT

(11) **EP 4 291 942 B1**
(45) Veröffentlichungstag und Bekanntmachung des Hinweises auf die Patenterteilung: **22.04.2026**
(21) Anmeldenummer: 21836354.7
(22) Anmeldetag: 06.12.2021
(51) Int. Cl.: G02B 27/09, G01S 17/931, G01B 11/25, B60Q 1/12, F21S 41/143, F21S 41/25, F21S 41/40, G01S 17/48, G01S 7/481, F21S 41/686

(54) **MIKROLINSENARRAY-PROJEKTIONSVORRICHTUNG, BELEUCHTUNGSVORRICHTUNG UND FAHRZEUG**
MICRO-LENS ARRAY PROJECTION DEVICE, ILLUMINATION DEVICE, AND VEHICLE
DISPOSITIF DE PROJECTION À RÉSEAU DE MICROLENTILLES, DISPOSITIF D'ÉCLAIRAGE ET VÉHICULE

(30) Priorität: 12.02.2021 DE 102021000724
(43) Veröffentlichungstag der Anmeldung: 20.12.2023
(73) Patentinhaber: Mercedes-Benz Group AG, 70372 Stuttgart (DE)
(72) Erfinder: YARGELDI, Sinan, 72581 Dettingen (DE); MÜLLER, Axel, 73614 Schorndorf (DE); BOROWSKI, Martin, 71334 Waiblingen (DE)
(74) Vertreter: Novagraaf Group
(86) Internationale Anmeldenummer: PCT/EP2021/084352
(87) Internationale Veröffentlichungsnummer: WO 2022/171328

(56) Entgegenhaltungen:
- EP-A1- 3 486 555
- WO-A1-2015/058227
- WO-A1-2017/157623
- DE-A1- 102010 043 829
- DE-A1- 102019 006 911
- DE-B3- 102018 116 511

## Beschreibung

Die Erfindung betrifft eine Mikrolinsenarray-Projektionsvorrichtung nach der im Oberbegriff von Anspruch 1 näher definierten Art, eine Beleuchtungsvorrichtung, ein Fahrzeug sowie eine Verwendung einer solchen Beleuchtungsvorrichtung in einem Umfelderfassungssystem eines Fahrzeugs zur Bestimmung einer Fahrwegbeschaffenheit.

Mit zunehmender Digitalisierung nimmt auch ein Automatisierungsgrad von Fahrzeugen zu. So verfügen heutzutage Fahrzeuge über eine breite Palette an Fahrerassistenzsystemen, welche eine fahrzeugführende Person bei der Bedienung ihres Fahrzeugs unterstützten und somit für einen höheren Komfort und/oder eine erhöhte Sicherheit im Straßenverkehr sorgen. Einige dieser Fahrerassistenzsysteme wie beispielsweise ein Abstandsregeltempomat oder ein Einparkassistent benötigen Umgebungsinformationen, wie das Vorhandensein von statischen und/oder dynamischen Umgebungsobjekten im Umfeld des Fahrzeugs sowie deren Relativabstand zum Fahrzeug. Einige Fahrerassistenzsysteme wie beispielsweise ein adaptives Fahrwerk erfordern zudem Informationen über eine Beschaffenheit eines in Kürze vom Fahrzeug befahrenen Fahrwegs.

Aus dem allgemeinen Stand der Technik sind verschiedene Sensorsysteme zur Umgebungsüberwachung bekannt. So haben sich insbesondere Ultraschallsensoren, Radarsensoren, Kamerasysteme mit einer Mono- oder Stereokamera, als auch Laserscanner wie Lidare bereits im Automobilbereich bewährt. Die Qualität der Berechnung von Tiefeninformationen unter Verwendung von Stereokameras ist jedoch vergleichsweise stark von einer Güte eines Zuordnungsalgorithmus zum Zuordnen von Bildinformationen zwischen den beiden verwendeten Kameras abhängig. Zudem lässt sich ein solches Systems zuverlässig nur bei Tageslicht anwenden und weist eine entfernungsabhängige Genauigkeit auf. Eine Anwendung dedizierter "Bodenlidare" zur Erfassung der Fahrwegbeschaffenheit kommt aufgrund von hohen Kosten und einer begrenzten vertikalen Winkelauflösung für einen Einsatz in Großserie nicht in Frage.

Ein weiteres Verfahren zur Umgebungsüberwachung beziehungsweise Gewinnung von Tiefeninformationen nutzt aktive Triangulation und erlaubt insbesondere das Abtasten eines vom Fahrzeug befahrenen Untergrunds, um dessen Beschaffenheit zu analysieren. Hierdurch können besonders schnell und effektiv Bodenunebenheiten wie Schlaglöcher, Bremsschwellen oder auch Fahrbahnbegrenzungen wie Bordsteine oder ein parallel zu einer Landstraße verlaufender Graben detektiert werden. Dabei wirft ein Projektor ein strukturiertes Lichtmuster in die Umgebung, insbesondere auf einen in Fahrtrichtung vor einem Fahrzeug liegenden Fahrweg, wobei von der Umgebung reflektierte Merkmalspunkte des Lichtmusters von einer am Fahrzeug angeordneten Kamera erfasst werden. Eine Abstandsbestimmung bzw. Gewinnung von Tiefeninformationen ist dabei unter einer Berücksichtigung der sogenannten Epipolargeometrie möglich. Durch einen örtlichen Versatz eines Anbringungsorts der Kamera und des Projektors am Fahrzeug ist es möglich, in von der Kamera erzeugten Kamerabildern eine Verschiebung der Merkmalspunkte des Lichtmusters zu erkennen, wenn das Lichtmuster aufgrund von Unebenheiten oder Umgebungsobjekten verzerrt wird. In Abhängigkeit eines Ausmaßes, wie stark das Lichtmuster verzerrt wird, können dann Tiefeninformationen berechnet werden. Der Einsatz eines auf aktiver Triangulation basierenden Systems zur Gewinnung von Tiefeninformationen erlaubt aufgrund der aktiven Beleuchtung einer Szenerie auch den Einsatz bei Dunkelheit.

So offenbart die DE 10 2015 008 774 A1 eine entsprechende Vorrichtung und ein entsprechendes Verfahren zur Erfassung eines Fahrzeugumfelds auf Basis von aktiver Triangulation. Hierbei wird als Projektor ein Pixelscheinwerfer des Fahrzeugs verwendet. Bei dem Pixelscheinwerfer kann es sich um einen Frontscheinwerfer des Fahrzeugs oder einen separaten Scheinwerfer handeln. Der Pixelscheinwerfer projiziert das Lichtmuster dabei in einem so kurzen Zeitfenster in die Umgebung, dass das Lichtmuster von einem Menschen nicht wahrgenommen werden kann. Dabei sind eine die Umgebung erfassende Kamera und der Pixelscheinwerfer zueinander synchronisiert, damit genau dann ein Kamerabild der Umgebung aufgenommen wird, wenn der Pixelscheinwerfer das Lichtmuster in die Umgebung wirft. Da das Lichtmuster nur kurzzeitig in die Umgebung geworfen wird und eine fahrzeugführende Person das Lichtmuster nicht wahrnehmen kann, kann das in der Druckschrift offenbarte Verfahren besonders komfortabel eingesetzt werden. Insbesondere wird die fahrzuführende Person hierdurch nicht abgelenkt. Dabei kann der Pixelscheinwerfer das Lichtmuster zusätzlich zu einer Grundbeleuchtung in die Umgebung werfen oder auch die Grundbeleuchtung während des Aussendens des Lichtmusters kurzzeitig deaktivieren oder wenigstens dimmen. Das Lichtmuster kann beispielsweise ein Linienmuster, Streifenmuster, Punktmuster, Gitternetzmuster, Schachbrettmuster und/oder ein pseudozufälliges Muster umfassen. Dabei erfolgt eine Hell/Dunkelregelung des Pixelscheinwerfers derart, dass beim Aussenden des Lichtmusters eine Grundhelligkeit der Grundbeleuchtung im zeitlichen Mittel konstant bleibt. Mit Hilfe der in der Druckschrift offenbarten Vorrichtung und dem Verfahren können Fahrbahnunebenheiten, Fahrbahnbegrenzungen und Umgebungsobjekte detektiert werden sowie deren Relativposition zum Fahrzeug bestimmt werden. Die in der Druckschrift offenbarte Vorrichtung nutzt zur Erzeugung des Lichtmusters einen Pixelscheinwerfer, welcher einen komplexen Aufbau aufweist und damit teuer ist.

Zudem sind aus dem allgemeinen Stand der Technik sogenannte Mikrolinsenarray-Projektoren, auch als Multiapertur-Projektionsdisplays bezeichnet, bekannt, mit deren Hilfe das Aussenden eines strukturierten Lichtmusters möglich ist. Hierzu ist eine Objektstruktur im Strahlengang zwischen einer Lichtquelle und einer Projektionsebene, auf der das Lichtmuster geworfen werden soll, angeordnet, um das Licht zu strukturieren. Ferner sind ein Feldlinsen-Array und ein Projektionslinsen-Array im Strahlengang vor bzw. hinter der Objektstruktur angeordnet, mit deren Hilfe ein gezieltes Fokussieren bzw. Bündeln der von der Lichtquelle ausgesendeten Lichtstrahlen möglich ist. Dabei ist jeweils eine Linse des Feldlinsen-Arrays und des Projektionslinsen-Arrays einer Substruktur der Objektstruktur zugeordnet. Beispielsweise werden solche Mikrolinsenarray-Projektoren zur Erzeugung einer ästhetischen Fahrzeugumfeldausleuchtung verwendet. Mit Hilfe des miniaturisierten Linsen-Arrays ist das Erzeugen einer vergleichsweise hohen Tiefenschärfe im Vergleich zu anderen Projektionssystemen möglich.

Eine Beleuchtungsvorrichtung für ein Kraftfahrzeug mit einem solchen Mikrolinsenarray-Projektor ist beispielsweise aus der DE 10 2014 219 371 A1 bekannt. Die Druckschrift beschreibt das Verwenden von mit Hilfe der Beleuchtungseinrichtung in eine Fahrzeugumgebung geworfenen Lichtmustern als Einparkassistent, Abstandskontrollassistent und/oder als Engstellendurchfahrtskontrollassistent. Ein mit Hilfe der in der Druckschrift offenbarten Beleuchtungseinrichtung in die Umgebung geworfenes Lichtmuster ist auf einen festgelegten Abstand zum Fahrzeug fokussiert, wodurch ein vom Lichtmuster umfasster Anzeigeinhalt bei einem bestimmten Abstand zwischen Fahrzeug und einem Objekt, auf das das Lichtmuster geworden wird, scharf erscheint. Fährt das Fahrzeug nun auf ein Objekt zu, so erscheint bei Erreichen des festgelegten Abstands der Anzeigeinhalt scharf, wodurch eine fahrzeugführende Person des Fahrzeugs bei Erreichen des festgelegten Abstands darüber informiert wird, dass der festgelegte Abstand zwischen Fahrzeug und Objekt erreicht wurde. Auch können mit der Beleuchtungseinrichtung gleichzeitig mehrere Lichtmuster in die Umgebung geworfen werden, welche jeweils auf eine individuelle Fokusebene fokussiert sind, die einen zueinander abweichenden Abstand zum Fahrzeug aufweisen. Hierdurch wird eine besonders einfache und kostengünstige Vorrichtung zum Informieren der fahrzeugführenden Person über einen Abstand zwischen Fahrzeug und einem Umgebungsobjekt geschaffen. So sind keine weiteren Anzeigen zur Visualisierung des Abstands zwischen Fahrzeug und Umgebungsobjekt notwendig. Dabei kann ein Multiapertur-Projektionsdisplay auch in mindestens einen Frontscheinwerfer und/oder einer Heckleuchte eines Fahrzeugs integriert sein.

Ferner offenbart die DE 10 2015 206 936 A1 ein Verfahren und eine Vorrichtung zum Detektieren von Hindernissen im Fahrweg eines Kraftfahrzeugs unter Anwendung aktiver Triangulation. In der Druckschrift wird als Projektor zur Erzeugung des Lichtmusters eine Anordnung aus Leuchtquelle, Strichgitter und Linse verwendet. Die Lichtquelle wird dabei insbesondere von einer Laserdiode ausgebildet und ist dazu eingerichtet, Infrarotlicht auszusenden. Das Strichgitter kann von einem Filterrad ausgebildet werden, welches eine Vielzahl unterschiedlicher Strichgitter zur Erzeugung unterschiedlicher Linienmuster aufweist. Durch Rotieren des Filterrades können dann die verschiedenen Strichgitter in einen Strahlengang zwischen Lichtquelle und Linse gebracht werden. Zudem kann die Anordnung aus Lichtquelle, Strichgitter und Linse auch um eine horizontale und vertikale Achse verschwenkbar sein, um das Lichtmuster in eine gewünschte Zielregion werfen zu können. Nachteilig ist dabei jedoch, dass ein Filterrad nur begrenzt Platz zur Aufnahme weiterer Strichgitter aufweist. Dies schränkt das Vorsehen weiterer Strichgitter zur Erzeugung unterschiedlicher Lichtmuster stark ein. Zudem weist ein mit der in der Druckschrift offenbarten Vorrichtung in die Umgebung geworfenes Lichtmuster nur eine vergleichsweise geringe Tiefenschärfe auf, was nur eine vergleichsweise geringe Genauigkeit bei der Gewinnung von Tiefeninformationen in weit vor dem Fahrzeug liegenden Umgebungsbereichen erlaubt.

Ferner offenbart die WO 2017/157623 A1 einen Scheinwerfer für ein Kraftfahrzeug mit dem es möglich ist ein dynamisches Licht auf einfache Weise zu erzeugen. Hierzu umfasst eine Beleuchtungseinrichtung des Scheinwerfers ein Multiapertur-Projektionsdisplay und einen flächigen digitalen Bildgeber. Der digitale Bildgeber kann durch ein LCD-Display ausgebildet sein. Die einzelnen Pixel des Displays lassen sich transparent oder opak schalten, wodurch von der Beleuchtungseinrichtung abgegebenes Licht gezielt blockiert oder hindurchgelassen werden kann, um die Form des vom Scheinwerfer abgegebenen Lichtmuster anzupassen. So lässt sich ein Abblendlicht, Fernlicht oder blendfreies Fernlicht erzeugen. Zudem lässt sich eine Hell-Dunkel-Grenze dynamisch verschieben.

Ferner offenbart die WO 2015/058227 A1 ein Mikroprojektions-Lichtmodul für einen Kraftfahrzeugscheinwerfer, umfassend wenigstens eine Lichtquelle, ein erstes Mikrolinsen-Array, ein zweites Mikrolinsen-Array und eine zwischen den Mikrolinsen-Arrays angeordnete Blendenvorrichtung. Die Mikrolinsen-Arrays und die Blendenvorrichtung können mehrteilig ausgeführt sein. In diesem Falle handelt es sich bei der Blendenvorrichtung um eine Lochmaske, Strichmaske, ein Raster oder dergleichen aus Metall. Das in Lichtausbreitungsrichtung auf die Blendenvorrichtung folgende Mikrolinsen-Array lässt sich über einen Aktor translatorisch verschieben. Hierdurch lässt sich die Form eines vom Kraftfahrzeugscheinwerfer abgegebenen Lichtmuster anpassen um beispielsweise ein Abbiegelicht, Kurvenlicht, Autobahnlicht, Abblendlicht und dergleichen zu erzeugen.

Ferner offenbart die EP 3 486 555 A1 ein Lichtmodul für einen Kraftfahrzeugscheinwerfer. Bei diesem Lichtmodul ist ebenfalls ein Display zwischen zwei Mikrolinsen-Arrays angeordnet, um die Form des vom Kraftfahrzeugscheinwerfer abgebbaren Lichtmuster anzupassen. Dabei kann ein quadratisches Pixel in einzeln ansteuerbare Untersegmente unterteilt sein, die eine von der quadratischen Form abweichende Form annehmen können. Somit lassen sich scharfkantige Hell-Dunkel-Grenzen erzeugen. Jedoch ist die Anzahl für ein Pixel vorhaltbarer verschiedener Formen aufgrund der begrenzten zur Verfügung stehenden Fläche innerhalb eines respektiven Pixels gering.

Ferner offenbart die DE 10 2010 043 829 A1 ein optisches Abtastsystem und -verfahren. Dabei werden zwei Bilder der Umgebung mit zwei unterschiedlichen Bildsensoren aufgenommen. Mit einer Beleuchtungseinrichtung erfolgt dabei eine Beleuchtung des erfassten Umgebungsabschnitts im Infrarotspektrum. Das dabei abgegebene Lichtmuster kann eine vorgegebene Struktur aufweisen.

Ferner offenbart die DE 10 2019 006 911 A1 eine Vorrichtung und ein Verfahren zur automatisierten Erfassung eines Fahrtzielbereichs. Die Druckschrift beschreibt das Abtasten der Umgebung basierend auf aktiver Triangulation. Zur Erzeugung des dafür benötigten Lichtmusters dient ein Projektionsmodul, umfassend ein Mikrolinsen-Array und eine Maske.

Zudem offenbart die DE 10 2018 116 511 B3 ein Verfahren zur Tiefenwahrnehmung basierend auf beidseitig angeordneten Scheinwerfern eines Fahrzeugs. Dabei werfen die beiden Scheinwerfer jeweils ein charakteristisches Lichtmuster in die Umgebung. Bevorzugt überlappen sich die Lichtmuster wenigstens teilweise. Es wird ein Abbild der Projektionsfläche aufgezeichnet. Anschließend wird eine Frequenzdarstellung der charakteristischen Lichtmuster im erfassten Bild berechnet und hieraus ein Überdeckungskoeffizient berechnet. Liegt eine unzureichende Überdeckung vor, werden die Lichtmuster verschoben.

Der vorliegenden Erfindung liegt die Aufgabe zugrunde, eine verbesserte Mikrolinsenarray-Projektionsvorrichtung zur Erzeugung von Lichtmustern anzugeben, welches eine Genauigkeit eines auf aktiver Triangulation basierenden Umfelderfassungssystems verbessert, wobei die Genauigkeit zudem von einer aktuellen Fahrsituation unbeeinflusst bleibt.

Erfindungsgemäß wird diese Aufgabe durch eine Mikrolinsenarray-Projektionsvorrichtung mit den Merkmalen des Anspruchs 1, eine Beleuchtungsvorrichtung mit den Merkmalen des Anspruchs 7, ein Fahrzeug mit den Merkmalen des Anspruchs 8 sowie eine Verwendung einer Beleuchtungsvorrichtung in einem Umfelderfassungssystem eines Fahrzeugs mit den Merkmalen des Anspruchs 9 gelöst. Vorteilhafte Ausgestaltungen und Weiterbildungen ergeben sich aus den hiervon abhängigen Ansprüchen.

Bei einer Mikrolinsenarray-Projektionsvorrichtung der eingangs genannten Art ist erfindungsgemäß die Musterschablone von einem Mikrodia-Array ausgebildet, welches wenigstens zwei unterschiedliche Mikrodias umfasst, welche die Erzeugung individueller Lichtmuster erlauben, wobei die Mikrodias in einer senkrecht zu einer optischen Achse stehenden Ebene zwischen dem Feldlinsen-Array und dem Projektionslinsen-Array durch wenigstens einen Aktor bewegbar sind.

Mit Hilfe der Mikrolinsenarray-Projektionsvorrichtung wird ein Lichtmuster mit einer vergleichsweise hohen Tiefenschärfe erzeugt. Das Mikrodia-Array ermöglicht das Vorsehen einer vergleichsweise hohen Anzahl unterschiedlicher Mikrodias, welche wiederum das Erzeugen individueller Lichtmuster erlauben. Zudem lassen sich die Mikrodias in der Ebene bewegen, wodurch ein gewünschtes Lichtmuster in einen gewünschten Umgebungsbereich werfbar ist. Dies erlaubt eine individuelle Anpassung des Lichtmusters auf eine aktuell vorliegende Umgebungssituation. So lässt sich durch Bewegen des oder der Mikrodias in einem bestimmte Umgebungsbereich eine gewünschte Ausbildung des Lichtmusters erzielen. Analog zum Stand der Technik kann des Lichtmuster dabei ein Linienmuster, Streifenmuster, Punktmuster, Gitternetzmuster, Schachbrettmuster, ein pseudozufälliges Muster oder dergleichen umfassen. So lässt sich beispielsweise eine Linien- oder Punktdichte in einem bestimmten Umgebungsbereich gezielt erhöhen oder erniedrigen. Auch lässt sich eine Orientierung beispielsweise von Linien entsprechend durch die Bewegung der Mikrodias anpassen. Beispielsweise lassen sich die Mikrodias in der Ebene durch eine Rotation und/oder Translation bewegen.

Als Lichtquelle kann die Mikrolinsenarray-Projektionsvorrichtung übliche Leuchtmittel wie wenigstens eine LED, OLED, Laser und/oder eine Lampe wie eine Halogen-, Glühfaden- oder Gasentladungslampe aufweisen.

Für das Erzeugen des Lichtmusters mit Hilfe des Mikrodia-Arrays ist es nicht zwangsweise erforderlich, dass das Feldlinsen-Array und das Projektionslinsen-Array eine gleiche Querschnittsfläche im Lichtstrahlengang aufweisen wie das Mikrodia-Array. So reicht es aus, wenn das Mikrodia-Array eine kleinere Querschnittsfläche aufweist, als die beiden Linsen-Arrays. Mit anderen Worten können mehr Feldlinsen und Projektionslinsen vorgesehen sein, als Mikrodias vom Mikrodia-Array umfasst sind. Dies erlaubt eine ungestörte Lichtausbreitung durch eine Paarung aus Feldlinse und Projektionslinse, wenn sich kein Mikrodia zwischen den Linsen befindet. Wird nun ein Mikrodia zwischen besagte Linsen bewegt, wird das durch das Mikrodia erzeugte Lichtmuster in den der Paarung aus der entsprechenden Feld- und Projektionslinse zugeordneten Umgebungsbereich geworfen. Die Anzahl an Feldlinsen und Projektionslinsen kann generell jedoch auch mit der Anzahl der Mikrodias zusammenfallen. Werden die Mikrodias nun bewegt, so können einzelne Mikrodias aus einer Linsenpaarung herausbewegt werden. Beispielsweise wird dann eine Aussparung in die Linsenpaarung hineinbewegt, um eine ungehinderte Lichtausbreitung durch die Linsenpaarung zu ermöglichen. Auch können mehr Mikrodias vorgesehen sein, als Linsenpaarungen vorhanden sind. So kann das von einer Linsenpaarung und einem speziellen Mikrodia erzeugte Lichtmuster durch Einbewegen eines alternativen Mikrodias geändert werden.

Eine vorteilhafte Weiterbildung der Mikrolinsenarray-Projektionsvorrichtung sieht vor, dass wenigstens zwei Mikrodias in sich kreuzenden, insbesondere aufeinander senkrecht stehenden Zeilen und Spalten bewegbar sind. Eine Anordnung der Mikrodias in Zeilen und Spalten ermöglicht eine besonders flexible und einfache Bewegbarkeit der Mikrodias.

Entsprechend einer weiteren vorteilhaften Ausgestaltung der Mikrolinsenarray-Projektionsvorrichtung ist der wenigstens einen Aktor dazu eingerichtet, wenigstens zwei Zeilen und/oder Spalten gleichzeitig zu bewegen, insbesondere translatorisch zu bewegen. Hierdurch kann ein Aufbau der erfindungsgemäßen Mikrolinsenarray-Projektionsvorrichtung vereinfacht werden. So sind zum Bewegen einer Vielzahl unterschiedlicher Zeilen und/oder Spalten weniger Aktoren erforderlich, wodurch Kosten eingespart werden können. Hierzu kann beispielsweise ein Aktor gleichzeitig an mehrere Zeilen und/oder Spalten angeschlossen sein. Beispielsweise können die Mikrodias in einem segmentierten oder nicht-segmentierten Streifen angeordnet sein, welcher durch den Aktor translatorisch innerhalb des Mikrodia-Arrays verschoben werden kann. Dabei ist es auch möglich, dass einzelne Streifen in Abhängigkeit ihrer Stellbewegung wenigstens partiell aus dem Mikrodia-Array und/oder einem dem Feldlinsen-Array und Projektionslinsen-Array zugeordneten Querschnittsbereich der Ebene herausgeschoben werden. Dabei kann der Aktor mittelbar oder unmittelbar an wenigstens ein Mikrodia bzw. einen entsprechenden Streifen angeschlossen sein. Durch das Verschieben der Mikrodias in der Ebene wird eine Zuordnung eines entsprechenden Mikrodias zu jeweiligen Feldlinsen und Projektionslinsen des Feldlinsen-Arrays und des Projektionslinsen-Arrays geändert. So kann beispielsweise eine bestimmte Kombination aus Feldlinse und Projektionslinse auf eine bestimmte Umgebungsregion fokussiert sein. Durch Bewegen eines gewünschten Mikrodias zwischen die entsprechende Feldlinse und die entsprechende Projektionslinse lässt sich, wie bereits erwähnt, dann das durch das entsprechende Mikrodia erzeugbare Lichtmuster in die gewünschte Umgebungsregion werfen. Generell ist es auch denkbar, dass unterschiedliche Paarungen aus Feld- und Projektionslinse in den selben Umgebungsbereich gerichtet sind, dabei jedoch eine abweichende Fokussierung aufweisen, ein durch ein Mikrodia erzeugtes Lichtmuster unterschiedlich stark verzerren und/oder auf sonstige Art und Weise manipulieren, beispielsweise in seiner Leuchtkraft unterschiedlich stark abschwächen oder polarisieren.

Eine weitere vorteilhafte Ausgestaltung der Mikrolinsenarray-Projektionsvorrichtung sieht ferner vor, dass wenigstens ein Aktor von einem Piezoaktor ausgebildet ist. Hierdurch kann ein Aufbau der Mikrolinsenarray-Projektionsvorrichtung vereinfacht werden sowie Kosten gesenkt werden. Piezoaktoren sind zudem besonders resistent gegenüber Erschütterungen, was einen robusten Betrieb der Mikrolinsenarray-Projektionsvorrichtung in einem vibrationsbelasteten Umfeld ermöglicht. Hierdurch kann eine Zuverlässigkeit der erfindungsgemäßen Mikrolinsenarray-Projektionsvorrichtung verbessert werden.

Entsprechend einer weiteren vorteilhaften Ausgestaltung der Mikrolinsenarray-Projektionsvorrichtung umfasst die Lichtquelle ein Leuchtmittel, welches dazu eingerichtet ist, Licht mit wenigstens einer dem Infrarotspektrum zugeordneten Wellenlänge auszusenden. Dabei kann das Leuchtmittel sowohl monochromatisches Licht mit einer festen Wellenlänge als auch mehrere Wellenlängen gleichzeitig aussenden. Dabei kann eine Wellenlänge dem Infrarotspektrum zugeordnet sein und wenigstens eine weitere Wellenlänge beispielsweise dem sichtbaren Licht zugeordnet sein. Es können jedoch auch sämtliche vom Leuchtmittel erzeugbare Wellenlängen dem Infrarotspektrum entstammen. Hierdurch lässt sich ein für Menschen nicht sichtbares Lichtmuster erzeugen, wodurch Personen nicht gestört und/oder geblendet werden können. Zudem sinkt somit das Risiko, dass das Lichtmuster von Umgebungslicht überstrahlt wird. Somit ist das Lichtmuster von einem Kamerasystem einfacher zu erfassen. Bei einer Verwendung eines mit Hilfe der erfindungsgemäßen Mikrolinsenarray-Projektionsvorrichtung erzeugten Lichtmusters bei einem Umfelderfassungssystem zur Bestimmung von Tiefeninformationen auf Basis von aktiver Triangulation lässt sich dabei zudem ein Gesamtsystem vereinfachen, da das Lichtmuster permanent, sprich kontinuierlich, in die Umgebung projiziert werden kann, wodurch keine Synchronisierung zwischen Kamera und Lichtquelle benötigt wird, um das Lichtmuster in von der Kamera erzeugten Kamerabildern sichtbar zu machen. Eine solche Synchronisierung ist, analog zum eingangs genannten Stand der Technik, beispielsweise notwendig bei Verwenden einer Lichtquelle, welche sichtbares Licht aussendet.

Bevorzugt umfassen die Mikrodias jeweils ein Muster aus für von der Lichtquelle ausgesendetem Licht transparenten und opaken Abschnitten, wobei wenigstens zwei Mikrodias ein zueinander abweichendes Muster aufweisen. Um eine Umgebung gezielt auszuleuchten, lässt sich zum einen ein festgelegtes Mikrodia zwischen eine bestimmte Kombination aus Feldlinse und Projektionslinse bewegen, wobei unterschiedliche Feldlinsen- und Projektionslinsenpaare beispielsweise das von dem Mikrodia erzeugte Lichtmuster in unterschiedliche Umgebungsregionen werfen und/oder dabei unterschiedlich stark verzerren und/oder fokussieren. Umfassen die einzelnen Mikrodias des Mikrodia-Arrays zudem unterschiedliche Muster, lässt sich die Umgebung gezielter in Abhängigkeit einer aktuell vorliegenden Fahrsituation ausleuchten. So kann beispielsweise eine Linien- oder Punktedichte in einer bestimmten Umgebungsregion gezielt erhöht oder verringert werden. Auch lässt sich hierdurch eine Orientierung einzelner Bestandteile eines Musters ändern und/oder das Ganze oder einzelne Abschnitte des in die Umgebung geworfenen Lichtmusters austauschen.

Erfindungsgemäß umfasst eine Beleuchtungsvorrichtung wenigstens eine im vorigen beschriebene Mikrolinsenarray-Projektionsvorrichtung. Die Beleuchtungsvorrichtung kann weitere Bauelemente wie Reflektoren, Spiegel, Stellglieder, Filter oder dergleichen aufweisen.

Erfindungsgemäß weist ein Fahrzeug eine solche Beleuchtungsvorrichtung auf. Bei dem Fahrzeug kann es sich um ein beliebiges Fahrzeug wie einen Pkw, Lkw, Transporter, Bus oder dergleichen handeln. Die Beleuchtungsvorrichtung kann dabei beispielsweise in wenigstens einen Frontscheinwerfer und/oder wenigstens eine Rückleuchte des Fahrzeugs integriert sein oder diese ausbilden. Dies erlaubt ein Aussenden eines mit Hilfe einer erfindungsgemäßen Mikrolinsenarray-Projektionsvorrichtung in eine Umgebung geworfenes Lichtmuster sowohl in einen Fahrzeugfrontbereich als auch einen Heckbereich des Fahrzeugs. Das Fahrzeug kann auch wenigstens teilautomatisiert gesteuert werden. Dabei können mit Hilfe des mit der erfindungsgemäßen Mikrolinsenarray-Projektionsvorrichtung in die Umgebung geworfenen Lichtmusters gewonnene Tiefeninformationen als Eingangsgröße für Fahrerassistenzsysteme wie beispielsweise ein aktives Fahrwerk und/oder ein System zur Durchführung von Stelleingriffen in eine Fahrzeuglängs- und/oder -querführung dienen.

Erfindungsgemäß wird eine im vorigen beschriebene Beleuchtungsvorrichtung in einem Umfelderfassungssystem eines Fahrzeugs zur Bestimmung einer Fahrwegbeschaffenheit eines von dem Fahrzeug befahrbaren Fahrwegs verwendet, insbesondere eines in einer Fahrtrichtung vor dem Fahrzeug liegenden Fahrwegs.

Bevorzugt wird dabei die Fahrwegbeschaffenheit auf Basis von aktiver Triangulation bestimmt. Ein solches Umfelderfassungssystem umfasst typischerweise wenigstens eine Beleuchtungsvorrichtung zur Erzeugung eines Lichtmusters, welches auf den vom Fahrzeug befahrenen Fahrweg geworfen wird, wenigstens eine Kamera zur Erzeugung von Kamerabildern des Lichtmusters, wobei die Kamera in einem vertikalen und/oder horizontalen Abstand zur Beleuchtungsvorrichtung am Fahrzeug angeordnet ist, sowie eine Recheneinheit zur Auswertung der Kamerabilder und/oder zur Ausgabe von Stellsignalen zur Ansteuerung der Beleuchtungsvorrichtung, damit diese das Lichtmuster an eine aktuelle Fahrsituation anpasst. Fährt das Fahrzeug beispielsweise auf eine Kurve zu, so ist eine Aussendung des Lichtmusters anzupassen, da sonst das Lichtmuster nicht mit dem durch die Kurve verlaufenden Fahrweg übereinstimmt. Dabei kann beispielsweise ein Verlauf der Kurve aus einer Analyse der von der Kamera erzeugten Kamerabildern gewonnen werden. Die Recheneinheit kann daraufhin ein Stellsignal zum Ansteuern der Aktoren ausgeben, welche daraufhin wenigstens ein Mikrodia in der Ebene zwischen dem Feldlinsen-Array und dem Projektionslinsen-Array bewegt. So lässt sich das Lichtmuster auf den durch die Kurve erstreckenden Fahrweg werfen, um beispielsweise ein aktives Fahrwerk auf in der Kurve vorliegende Erhebungen und Vertiefungen zu konditionieren, um ein komfortables Fahrgefühl für eine fahrzeugführende Person des Fahrzeugs zu ermöglichen. Dank einer aktiven Ausleuchtung der Umgebung lässt sich somit auch bei Dunkelheit die Beschaffenheit des Fahrwegs erfassen. Dank der im Zusammenhang mit Mikrolinsenarray-Projektoren erzeugbaren vergleichsweise hohen Tiefenschärfe ergibt sich zudem eine geringere Degradation der Erfassungsgenauigkeit mit steigender Entfernung zum Fahrzeug.

Weitere vorteilhafte Ausgestaltungen der erfindungsgemäßen Mikrolinsenarray-Projektionsvorrichtung, der Beleuchtungsvorrichtung, des Fahrzeugs sowie einer Verwendung der Beleuchtungsvorrichtung in einem Umfelderfassungssystem des Fahrzeugs zur Bestimmung einer Fahrwegbeschaffenheit eines vom Fahrzeug befahrenen Fahrwegs ergeben sich auch aus den Ausführungsbeispielen, welche nachfolgend unter Bezugnahme auf die Figuren näher beschrieben werden.

Dabei zeigen:
- Fig. 1: eine Prinzipdarstellung eines auf aktiver Triangulation beruhenden Umfelderfassungssystems;
- Fig. 2: ein beispielhaftes auf einen künftig von einem Fahrzeug befahrenen Fahrweg geworfenen Lichtmusters;
- Fig. 3: eine schematische Darstellung einer erfindungsgemäßen Mikrolinsenarray-Projektionsvorrichtung;
- Fig. 4: eine Detailansicht einer in Figur 3 dargestellten Anordnung aus Feldlinsen-Array, Mikrodia-Array und Projektionslinsen-Array;
- Fig. 5: eine Draufsicht auf das Mikrodia-Array aus Richtung einer optischen Achse;
- Fig. 6: eine Draufsicht auf ein alternatives Mikrodia-Array aus Richtung der optischen Achse; und
- Fig. 7: eine schematische Darstellung einer Anpassung des auf den Fahrweg gewordenen Lichtmusters in Abhängigkeit einer wechselnden Fahrsituation.

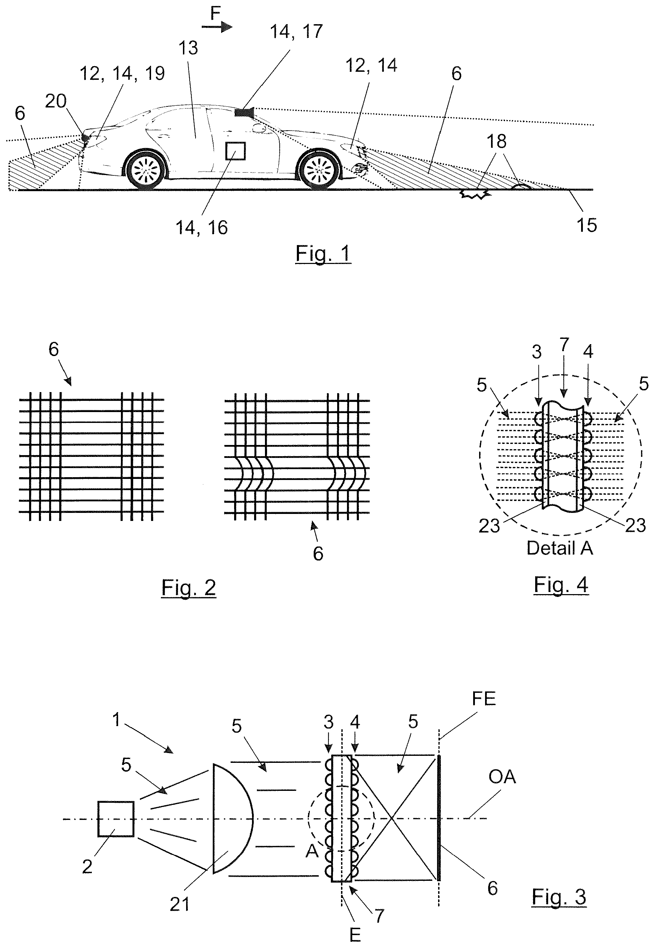

Figur 1 zeigt eine Anwendung eines auf aktiver Triangulation beruhenden Umfelderfassungssystems 14 von einem Fahrzeug 13, hier in Form eines Pkw. Das Umfelderfassungssystem 14 umfasst wenigstens eine erfindungsgemäße Beleuchtungsvorrichtung 12, eine Recheneinheit 16 und eine Kamera 17. Die Beleuchtungsvorrichtung 12 weist wiederum wenigstens eine erfindungsgemäße Mikrolinsenarray-Projektionsvorrichtung 1 auf oder wird von dieser ausgebildet. Die Beleuchtungsvorrichtung 12 kann insbesondere in einen Fahrzeugscheinwerfer integriert sein oder diesen selbst ausbilden. Mit Hilfe der Beleuchtungsvorrichtung 12 wird ein in Figur 2 näher gezeigtes Lichtmuster 6 auf einen in Fahrtrichtung F vor dem Fahrzeug 13 liegenden Fahrweg 15 geworfen. Das Lichtmuster 6 wird mit Hilfe der Kamera 17 erfasst. Das Lichtmuster 6 wird durch sich auf dem Fahrweg 15 befindliche Strukturen 18 wie Schlaglöcher oder Bodenwellen verzerrt. Die Kamera 17 weist einen möglichst großen vertikalen und/oder horizontalen Versatz zur Beleuchtungsvorrichtung 12 auf, um das auf den Fahrweg 15 geworfene verzerrte Lichtmuster 6 möglichst ungestört erfassen zu können. Von der Kamera 17 erzeugte Kamerabilder werden auf der Recheneinheit 16 ausgewertet. Dabei wird untersucht, wie stark das Lichtmuster 6 durch die Strukturen 18 verzerrt wurde. Durch die Analyse einer Stärke der Verzerrung des Lichtmusters 6 lassen sich Tiefeninformationen gewinnen, um eine Aussage über eine Fahrwegbeschaffenheit des Fahrwegs 15 treffen zu können.

Generell ist es auch denkbar, dass das Fahrzeug 13 auch eine entgegen der Fahrtrichtung F nach hinten gerichtete Beleuchtungsvorrichtung 12 aufweist, beispielsweise in einer Heckleuchte 19. Analog weist das Fahrzeug 13 eine nach hinten gerichtete Rückfahrkamera 20 auf, um das nach hinten geworfene Lichtmuster 6 zu erfassen.

Die von der Recheneinheit 16 berechneten Tiefeninformationen bzw. Fahrwegbeschaffenheit kann dann wiederum als Eingangsgröße für Fahrerassistenzsysteme, beispielsweise ein adaptives Fahrwerk, genutzt werden.

Figur 2 zeigt das beispielhafte Lichtmuster 6 in einer Draufsicht. In Figur 2 wird das Lichtmuster 6 von einem Linienmuster ausgebildet. Generell kann das Lichtmuster 6 jedoch jede denkbare Gestaltung aufweisen. Beispielsweise kann es sich auch um ein Streifenmuster, Punktmuster, Gitternetzmuster, Schachbrettmuster und/oder ein pseudozufälliges Muster handeln. In der hier gezeigten Ausführung weist das Lichtmuster 6 horizontale und vertikale Linien auf, wobei die vertikalen Linien insbesondere mit einem künftig von Rädern des Fahrzeugs 13 befahrenen Fahrspuren zusammenfallen. In der linken Hälfte von Figur 2 ist ein unverzerrtes Lichtmuster 6 gezeigt. In der rechten Hälfte von Figur 2 wird das Lichtmuster 6 durch eine Bodenwelle, hier in Form einer Bremsschwelle, verzerrt. Das Lichtmuster ist insbesondere so ausgeführt, dass für bestimmte Umgebungsbereiche, in denen das Lichtmuster 6 geworfen wird, welche mit einer Trajektorie von Fahrspuren des Fahrzeugs 13 zusammenfallen, eine höhere Inhaltsdichte von Musterinhalten, hier den vertikalen Streifen, realisiert wird.

Figur 3 zeigt eine schematische Darstellung der erfindungsgemäßen Mikrolinsenarray-Projektionsvorrichtung 1. Diese umfasst eine Lichtquelle 2, beispielsweise mit einem Leuchtmittel in Form wenigstens einer LED, OLED, einem Laser, einer Glühlampe oder dergleichen. In einem Lichtstrahlengang 5 der Lichtquelle 2 nachgeordnet findet sich eine optionale Linse 21. Die Linse 21 kann beliebig ausgeführt sein. Beispielsweise kann diese wenigstens eine plane, konvexe oder konkave Seite aufweisen.

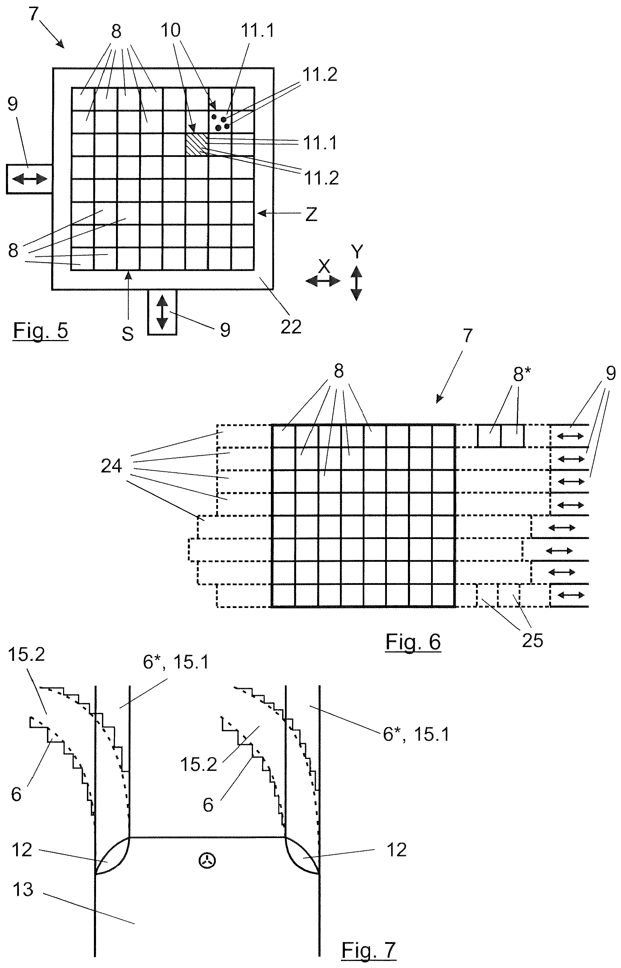

Das Licht trifft nach der Linse 21 auf ein Feldlinsen-Array 3, welches eine Vielzahl Feldlinsen umfasst. Insbesondere sind die Feldlinsen orthogonal in einer von in Figur 5 am Beispiel eines Mikrodia-Arrays 7 näher gezeigten Zeilen Z und Spalten S ausgebildeten zweidimensionalen Matrix angeordnet.

An das Feldlinsen-Array 3 schließt sich ein Mikrodia-Array 7 an. Dieses umfasst eine Vielzahl an Mikrodias 8, welche wiederum Muster 10 aus für das von der Lichtquelle 2 ausgesendeten Lichts transparente 11.1 und opake Abschnitte 11.2 aufweisen. Die Abschnitte 11.1 und 11.2 sind in Figur 5 näher dargestellt. Mit Hilfe der Mikrodias 8 bzw. der von den Mikrodias 8 umfassten Muster 10 lässt sich aus dem von der Lichtquelle 2 ausgesendeten Licht das Lichtmuster 6 erzeugen.

An das Mikrodia-Array 7 schließt sich ein Projektionslinsen-Array 4 an. Die Mikrodias 8 sind dabei innerhalb einer orthogonal zu einer optischen Achse OA stehenden Ebene E bewegbar. Durch eine Bewegung der Mikrodias 8 kann das Lichtmuster 6 verändert werden.

Das Lichtmuster 6 fällt wiederum in einer Fokusebene FE auf eine nicht dargestellte Reflektionsebene, beispielsweise auf den Fahrweg 15. Die Fokusebene FE muss dabei nicht zwangsweise, wie in Figur 3 dargestellt, parallel zur Ebene E orientiert sein. Insbesondere ist die erfindungsgemäße Mikrolinsenarray-Projektionsvorrichtung 1 so ausgeführt, dass ein wie in Figur 1 auf einen Fahrweg 15 geworfenes Lichtmuster 6 entlang seiner vollständigen Projektion auf den Fahrweg 15 scharf erscheint. Hierzu können die einzelnen Feld- und Projektionslinsen des Feldlinsen-Arrays 3 und des Projektionslinsen-Arrays 4 zueinander abweichende Brennpunkte aufweisen. Insbesondere ist ein festgelegtes Mikrodia 8 einer festgelegten Paarung aus Feldlinse und Projektionslinse zugeordnet. Durch Bewegen der Mikrodias 8 in der Ebene E kann diese Zuordnung verändert werden.

Insbesondere ist die Lichtquelle 2 dazu eingerichtet, Infrarotlicht auszusenden. Infrarotlicht hat den Vorteil, dass es von Menschen nicht wahrnehmbar ist, wodurch Personen von dem Lichtmuster 6 nicht gestört und/oder abgelenkt werden können. Zudem wird das Lichtmuster 6 somit kaum bis gar nicht durch von der Umgebung reflektiertes Umgebungslicht beeinträchtigt.

Die erfindungsgemäßen Mikrolinsenarray-Projektionsvorrichtung 1 kann zudem weitere nicht gezeigte Bauteile wie zusätzliche Linsen, Filter, Reflektoren, Spiegel, Kühlkörper, Stelleinrichtungen oder dergleichen aufweisen.

Figur 3 umfasst zudem ein Detail A, welches in Figur 4 näher gezeigt ist. Das Mikrodia-Array 7 kann beispielsweise wie in Figur 5 gezeigt einen vollumfänglich geschlossenen oder an wenigstens einer Seite geöffneten Rahmen 22 aufweisen. Auf dem Rahmen 22 befindet sich ein Substrat 23, auf welchen die Feldlinsen und Projektionslinsen angeordnet sind. Es ist auch denkbar, dass der Rahmen 22 das Substrat 23 ausbildet oder die Feldlinsen und/oder Projektionslinsen auf eine beliebige Art und Weise mittelbar oder unmittelbar auf dem Mikrodia-Array 7 aufliegen.

Figur 5 zeigt eine Draufsicht auf das Mikrodia-Array 7 aus Richtung der optischen Achse OA. In der Ausführung in Figur 5 sind die Mikrodias 8 in Zeilen Z und Spalten S angeordnet, welche hier orthogonal zueinander stehen. Generell können sich die Zeilen Z und Spalten S jedoch auch mit einem beliebigen Winkel, beispielsweise in einem Winkel von 60°, zueinander schneiden. Die Mikrolinsenarray-Projektionsvorrichtung 1 bzw. das Mikrodia-Array 7 kann wenigstens einen Aktor 9 zur Bewegung der Mikrodias 8 umfassen. Der Aktor 9 kann dabei an den Rahmen 22 angeschlossen sein oder beispielsweise durch eine seitliche Öffnung des Rahmens 22 hindurchragen und an wenigstens ein Mikrodia 8 und/oder eine zur Aufnahme der Mikrodias 8 geeignete übergeordnete Struktur, beispielsweise einen in Figur 6 gezeigten Streifen 24 angeschlossen sein. Bei dem Aktor 9 kann es sich insbesondere um ein Piezoaktor handeln. Der Aktor 9 kann beispielsweise einen translatorischen Hub ausüben, um die Mikrodias 8 in eine x- oder y-Richtung zu bewegen. Dabei ist es besonders vorteilhaft, wenn mit Hilfe eines Aktors 9 gleichzeitig Mikrodias 8 in wenigstens zwei Zeilen Z und/oder Spalten S bewegt werden können. Somit lässt sich eine Anzahl erforderlicher Aktoren 9 reduzieren, was den Aufbau der erfindungsgemäßen Mikrolinsenarray-Projektionsvorrichtung 1 vereinfacht, wodurch wiederum Kosten gespart werden können. Generell ist es dabei auch denkbar, dass jeweils wenigstens eine Zeile Z und/oder Spalte S des Mikrodia-Arrays 7 bewegungsstarr ausgeführt ist.

Innerhalb einer Zeile Z und/oder Spalte S des Mikrodia-Arrays 7 befindet sich eine Vielzahl einzelner Mikrodias 8. Diese können unterschiedliche Muster 10 aus wenigstens einem für das von der Lichtquelle 2 ausgesendeten Lichts transparenten 11.1 und opaken Abschnitt 11.2 aufweisen. In dem Beispiel in Figur 5 sind lediglich zwei beispielhafte Muster 10 für zwei Mikrodias 8 gezeigt. Es können auch mehrere Mikrodias 8 das gleiche Muster 10 aufweisen.

Wie Figur 6 zeigt, kann eine Bewegung der Spalten S oder, wie dargestellt, eine Bewegung der Zeilen Z lediglich entlang einer der Richtungen x oder y erfolgen. In Figur 6 sind die einzelnen Mikrodias 8 in Form von Streifen 24 angeordnet, wobei die Streifen 24 entlang der x-Richtung bewegt werden können. Eine translatorische Bewegung einzelner oder aller Mikrodias 8 in die y-Richtung ist in dem Beispiel in Figur 6 nicht möglich. Dies vereinfacht den Aufbau des Mikrodia-Arrays 7 noch weiter. Die einzelnen Aktoren 9 können dabei die Streifen 24 so weit bewegen, dass ein an einer beliebigen horizontalen Position im Mikrodia-Array 7 angeordnetes Mikrodia 8 an eine jegliche beliebige andere horizontale Position bewegt werden kann. Dazu kann der Aktor 9 mittelbar oder unmittelbar an einen Streifen 24 bzw. ein Mikrodia 8 angeschlossen sein.

Die Streifen 24 können auch segmentiert sein, sodass sowohl eine translatorische Verschiebung der Mikrodias 8 in die x- und y-Richtung ermöglicht wird (nicht dargestellt). Ferner kann wenigstens ein Streifen 24 auch weitere Mikrodias 8* und/oder auch Aussparungen 25 aufweisen, um alternative Lichtmuster 6 erzeugen zu können und/oder eine ungehinderte Lichtausbreitung zu ermöglichen. Ein Streifen 24 selbst kann dabei auch als "Blende" fungieren, indem der Streifen 24 eine ungestörte Lichtausbreitung durch eine Linsenpaarung verhindert.

Figur 7 zeigt eine Draufsicht auf eine typische Fahrsituation des Fahrzeugs 13. Mit Hilfe eines aus dem Stand der Technik bekannten Mikrolinsenarray-Projektionsdisplays lässt sich lediglich ein starres Lichtmuster 6* erzeugen, welches auf einen gerade verlaufenden Fahrweg 15.1, dargestellt durch durchgezogene Linien, werfbar ist. Verläuft der Fahrweg 15.2, jedoch, wie durch die gestrichelten Linien dargestellt, entlang einer Kurve, so würde ein relevanter Fahrwegbereich nicht ausreichend ausgeleuchtet. Mit Hilfe der erfindungsgemäßen Mikrolinsenarray-Projektionsvorrichtung 1 und der entsprechenden Beleuchtungsvorrichtung 12 lässt sich das Lichtmuster 6 jedoch verändern, sodass es mit dem kurvigen Fahrweg 15.2 zusammenfällt. Dies erlaubt eine ideale Ausleuchtung des tatsächlich vom Fahrzeug 13 befahrenen Fahrwegs 15. Somit ist eine Anpassung des Lichtmusters 6 an eine aktuell vorliegende Fahrsituation möglich. Neben einer flexiblen Anpassung des Lichtmusters 6 an abweichende Straßen- und/oder Fahrdynamiksituationen ermöglicht die erfindungsgemäße Mikrolinsenarray-Projektionsvorrichtung 1 somit eine besonders zuverlässige Erfassung des Fahrwegs 15 auch bei Dunkelheit sowie zu einer beliebigen Entfernung des Lichtmusters 6 zum Fahrzeug 13, dank der mit der Verwendung von Mikrolinsenarray-Projektoren einhergehenden hohen Tiefenschärfe des erzeugbaren Lichtmusters 6. Somit sinkt eine Degradation einer Erfassungsgenauigkeit mit zunehmender Entfernung zum Fahrzeug 13. Dank einer Verwendung einer Infrarotlichtquelle ist ein entsprechendes Umfelderfassungssystem 14 zudem robust gegenüber Umgebungslicht und weist eine geringe Komplexität auf.

## Patentansprüche

1. Mikrolinsenarray-Projektionsvorrichtung (1) mit jeweils wenigstens einer Lichtquelle (2), einem Feldlinsen-Array (3), einem Projektionslinsen-Array (4) und einer in einem von der Lichtquelle (2) ausgehenden Lichtstrahlengang (5) zwischen Feldlinsen-Array (3) und Projektionslinsen-Array (4) angeordneten Musterschablone zur Erzeugung eines strukturierten Lichtmusters (6) für das Gewinnen von Tiefeninformationen basierend auf aktiver Triangulation aus dem von der Lichtquelle (2) ausgesendetem Licht,
**dadurch gekennzeichnet, dass**
die Musterschablone von einem Mikrodia-Array (7) ausgebildet ist, welches wenigstens zwei unterschiedliche Mikrodias (8) umfasst, welche die Erzeugung individueller Lichtmuster (6) erlauben, wobei die Mikrodias (8) in einer senkrecht zu einer optischen Achse (OA) stehenden Ebene (E) zwischen dem Feldlinsen-Array (3) und dem Projektionslinsen-Array (4) durch wenigstens einen Aktor (9) bewegbar sind.

2. Mikrolinsenarray-Projektionsvorrichtung (1) nach Anspruch 1,
**dadurch gekennzeichnet, dass**
wenigstens zwei Mikrodias (8) in sich kreuzenden, insbesondere aufeinander senkrecht stehenden, Zeilen (Z) und Spalten (S) bewegbar sind.

3. Mikrolinsenarray-Projektionsvorrichtung (1) nach Anspruch 2,
**dadurch gekennzeichnet, dass**
der wenigstens eine Aktor (9) dazu eingerichtet ist wenigstens zwei Zeilen (Z) und/oder Spalten (S) gleichzeitig zu bewegen, insbesondere translatorisch zu bewegen.

4. Mikrolinsenarray-Projektionsvorrichtung (1) nach einem der Ansprüche 1 bis 3,
**dadurch gekennzeichnet, dass**
wenigstens ein Aktor (9) von einem Piezoaktor ausgebildet ist.

5. Mikrolinsenarray-Projektionsvorrichtung (1) nach einem der Ansprüche 1 bis 4,
**dadurch gekennzeichnet, dass**
die Lichtquelle (2) ein Leuchtmittel umfasst, welches dazu eingerichtet ist Licht mit wenigstens einer dem Infrarotspektrum zugeordneten Wellenlänge auszusenden.

6. Mikrolinsenarray-Projektionsvorrichtung (1) nach einem der Ansprüche 1 bis 5,
**dadurch gekennzeichnet, dass**
die Mikrodias (8) jeweils ein Muster (10) aus für von der Lichtquelle (2) ausgesendetes Licht transparenten (11.1) und opaken Abschnitten (11.2) umfassen, wobei wenigstens zwei Mikrodias (8) ein zueinander abweichendes Muster (10) aufweisen.

7. Beleuchtungsvorrichtung (12),
**gekennzeichnet durch**
wenigstens eine Mikrolinsenarray-Projektionsvorrichtung (1) nach einem der Ansprüche 1 bis 6.

8. Fahrzeug (13), umfassend eine Kamera (17),
**gekennzeichnet durch**
wenigstens eine Beleuchtungsvorrichtung (12) nach Anspruch 7.

9. Verwendung einer Beleuchtungsvorrichtung (12) nach Anspruch 7 in einem Umfelderfassungssystem (14) eines Fahrzeugs (13) nach Anspruch 8 zur Bestimmung einer Fahrwegbeschaffenheit eines von dem Fahrzeug (13) befahrbaren Fahrwegs (15), insbesondere eines in einer Fahrtrichtung (F) vor dem Fahrzeug (13) liegenden Fahrwegs (15).

10. Verwendung nach Anspruch 9,
**dadurch gekennzeichnet, dass**
die Fahrwegbeschaffenheit auf Basis von aktiver Triangulation bestimmt wird.

## Claims

1. Microlens array projection device (1) comprising, in each case, at least one light source (2), a field lens array (3), a projection lens array (4) and a pattern template which is arranged in a light beam path (5), which emanates from the light source (2), between the field lens array (3) and the projection lens array (4) in order to generate a structured light pattern (6) for obtaining depth information based on active triangulation from the light emitted by the light source (2),
**characterized in that**
the pattern template is formed by a microslide array (7) that comprises at least two different microslides (8) which allow individual light patterns (6) to be generated, wherein the microslides (8) can be moved in a plane (E) perpendicular to an optical axis (OA) between the field lens array (3) and the projection lens array (4) by at least one actuator (9).

2. Microlens array projection device (1) according to claim 1,
**characterized in that**
at least two microslides (8) can be moved in intersecting, in particular mutually perpendicular, rows (Z) and columns (S).

3. Microlens array projection device (1) according to claim 2,
**characterized in that**
the at least one actuator (9) is configured to move at least two rows (Z) and/or columns (S) simultaneously, in particular to move them translationally.

4. Microlens array projection device (1) according to any of claims 1 to 3,
**characterized in that**
at least one actuator (9) is formed by a piezo actuator.

5. Microlens array projection device (1) according to any of claims 1 to 4,
**characterized in that**
the light source (2) comprises a lamp which is configured to emit light with at least one wavelength associated with the infrared spectrum.

6. Microlens array projection device (1) according to any of claims 1 to 5,
**characterized in that**
the microslides (8) each comprise a pattern (10) of portions that are transparent (11.1) and opaque (11.2) to light emitted by the light source (2), with at least two microslides (8) having a pattern (10) that differs from the other.

7. Lighting device (12),
**characterized by**
at least one microlens array projection device (1) according to any of claims 1 to 6.

8. Vehicle (13), comprising a camera (17),
**characterized by**
at least one lighting device (12) according to claim 7.

9. Use of a lighting device (12) according to claim 7 in an environment detection system (14) of a vehicle (13) according to claim 8 for determining a roadway condition of a roadway (15) that is traversable by the vehicle (13), in particular a roadway (15) lying in front of the vehicle (13) in a direction of travel (F).

10. Use according to claim 9,
**characterized in that**
the roadway condition is determined on the basis of active triangulation.

## Revendications

1. Dispositif de projection à réseau de microlentilles (1) comportant respectivement au moins une source de lumière (2), un réseau de lentilles de champ (3), un réseau de lentilles de projection (4) et un gabarit de modèle disposé dans un trajet de rayons lumineux (5) partant de la source de lumière (2) entre le réseau de lentilles de champ (3) et le réseau de lentilles de projection (4) pour la génération d'un modèle de lumière (6) structuré pour l'obtention d'informations de profondeur basées sur une triangulation active à partir de la lumière émise par la source de lumière (2),
**caractérisé en ce que**
le gabarit de modèle est réalisé par un réseau de microdiapositives (7) comprenant au moins deux microdiapositives (8) différentes qui permettent la génération de modèles de lumière (6) individuels, dans lequel les microdiapositives (8) peuvent être déplacées dans un plan (E) perpendiculaire à un axe optique (OA) entre le réseau de lentilles de champ (3) et le réseau de lentilles de projection (4) par au moins un actionneur (9).

2. Dispositif de projection à réseau de microlentilles (1) selon la revendication 1,
**caractérisé en ce que**
au moins deux microdiapositives (8) peuvent être déplacées dans des lignes (Z) et des colonnes (S) se croisant, en particulier perpendiculaires les unes aux autres.

3. Dispositif de projection à réseau de microlentilles (1) selon la revendication 2,
**caractérisé en ce que**
l'au moins un actionneur (9) est configuré pour déplacer simultanément au moins deux lignes (Z) et/ou colonnes (S), en particulier pour les déplacer en translation.

4. Dispositif de projection à réseau de microlentilles (1) selon l'une des revendications 1 à 3,
**caractérisé en ce que**
au moins un actionneur (9) est réalisé par un actionneur piézoélectrique.

5. Dispositif de projection à réseau de microlentilles (1) selon l'une des revendications 1 à 4,
**caractérisé en ce que**
la source de lumière (2) comprend un moyen d'éclairage configuré pour émettre de la lumière avec au moins une longueur d'onde associée au spectre infrarouge.

6. Dispositif de projection à réseau de microlentilles (1) selon l'une des revendications 1 à 5,
**caractérisé en ce que**
les microdiapositives (8) comprennent respectivement un modèle (10) de sections transparentes (11.1) et opaques (11.2) pour la lumière émise par la source de lumière (2), dans lequel au moins deux microdiapositives (8) présentent un modèle (10) différent l'un de l'autre.

7. Dispositif d'éclairage (12),
**caractérisé par**
au moins un dispositif de projection à réseau de microlentilles (1) selon l'une des revendications 1 à 6.

8. Véhicule (13), comprenant une caméra (17),
**caractérisé par**
au moins un dispositif d'éclairage (12) selon la revendication 7.

9. Utilisation d'un dispositif d'éclairage (12) selon la revendication 7 dans un système de détection d'environnement (14) d'un véhicule (13) selon la revendication 8 pour la détermination d'une nature de voie de circulation d'une voie de circulation (15) pouvant être empruntée par le véhicule (13), en particulier une voie de circulation (15) située en amont du véhicule (13) dans un sens de circulation (F).

10. Utilisation selon la revendication 9,
**caractérisé en ce que**
la nature de voie de circulation est déterminée sur la base d'une triangulation active.
